# EUROPEAN PATENT SPECIFICATION

(11) **EP 3 831 548 B1**
(45) Date of publication and mention of the grant of the patent: **27.12.2023**
(21) Application number: 19844736.9
(22) Date of filing: 08.05.2019
(51) Int. Cl.: B25J 11/00, B25J 13/00, B25J 19/06, B25J 9/16, G05D 1/02, A47L 9/28, A47L 11/40, G05D 1/00, G06F 3/16, G10L 13/033

(54) **ARTIFICIAL INTELLIGENCE MOBILE ROBOT**
MOBILER ROBOTER MIT KÜNSTLICHER INTELLIGENZ
ROBOT MOBILE À INTELLIGENCE ARTIFICIELLE

(30) Priority: 01.08.2018 US 201862713501 P; 15.11.2018 KR 20180140743
(43) Date of publication of application: 09.06.2021
(73) Proprietor: LG Electronics Inc., Seoul 07336 (KR)
(72) Inventor: CHO, Minkyu, Seoul 08592 (KR)
(74) Representative: Ter Meer Steinmeister & Partner
(86) International application number: PCT/KR2019/005462
(87) International publication number: WO 2020/027406

(56) References cited:
- KR-A- 20040 043 422
- KR-A- 20060 032 877
- KR-A- 20060 032 877
- KR-A- 20140 072 601
- KR-A- 20150 014 237
- KR-A- 20180 082 242

## Description

### [Technical Field]

The following description relates to a moving robot and a method of controlling the same, and more particularly to a moving robot capable of providing information and services based on trained artificial intelligence, and a method of controlling the same.

### [Background Art]

Robots have been developed for industrial use and have been part of factory automation. Recently, the application field of robots has been expanded, such that medical robots, aerospace robots, and the like have been developed and household robots that can be used in ordinary houses have also been manufactured. Among these robots, a robot that can travel by itself is called a moving robot.

A typical example of the moving robot used in home is a robot cleaner, and the robot cleaner is a device that cleans a predetermined region by suctioning dust or dirt around it while traveling through the region by itself.

Since a moving robot can move by itself, it can freely move, and is equipped with several sensors to avoid obstacles, etc. while traveling, such that the moving robot may travel while avoiding obstacles.

In order to improve user convenience, speech recognition techniques have been applied to various devices and there is increasing research on a method of controlling the moving robot by using the speech recognition techniques.

For example, related art 1 (Korean Laid-Open Patent Publication No. 10-2012-0114670, published on October 17, 2012) discloses a robot cleaner equipped with a speech recognition unit to recognize a user's speech signal and perform an operation in response thereto.

In the related art 1, speech input is performed unidirectionally from a user to a robot cleaner, such that the speech input is merely used as an additional means in a controlling operation performed by pressing a button or using a remote control. Accordingly, there is a problem in that the speech recognition function means no more than merely a control function to users, and may not provide other function and service than serving as an additional control input means. KR 2006 0032877 A relates to a speech recognition system for a robot cleaner that reduces the influence of the noise signal generated during the cleaning and improves speech recognition accuracy.

### [Disclosure of invention]

### [Technical Problem]

It is an object of the present disclosure to provide an electronic device, such as a moving robot and the like, and a method of controlling the same, in which beyond the limit of related art 1 which discloses using speech recognition as merely a control input means, the present disclosure may provide interaction with a user through speech.

It is another object of the present disclosure to provide an electronic device, such as a moving robot and the like, which may provide a speech output that varies according to a usage time, frequency, pattern, etc., so as to generate expectations in users and provide a fun factor to the users, as well as to improve reliability and preference of a product.

It is yet another object of the present disclosure to provide an electronic device such as a moving robot and the like which may actively provide a variety of information and services to users.

### [Technical Solution]

The invention is set forth in the independent claim 1 and in the dependent claims 2 to 8. In order to achieve the above and other objects, there is provided an electronic device such as a moving robot and the like according to an aspect of the present disclosure, in which the electronic device such as the moving robot and the like may utter speech providing users with predetermined information and informing users of services, thereby providing interaction with the users through speech.

In order to achieve the above and other objects, there is provided an electronic device such as a moving robot and the like according to another aspect of the present disclosure, in which a voice feedback is provided which grows older in age as a voice, tone, etc., of the moving robot vary according to a usage time, frequency, pattern, etc., thereby generating expectations in users and providing a fun factor to the users, as well as improving reliability and preference of a product.

In accordance with an aspect of the present disclosure, the above and other objects can be accomplished by providing a moving robot including: an input unit configured to receive a speech input of a user; an audio output unit configured to output a feedback voice message corresponding to the speech input; a storage configured to store a usage history of the moving robot; and a controller configured to control the feedback voice message to be output in different voices according to the stored usage history, thereby providing different voice feedbacks according to the usage history.

Here, the controller may select the voice according to a usage time of the moving robot or a success rate or number of times of success in performing operations of the moving robot, such that a user may intuitively verify how long the moving robot has been used, or how often a predetermined operation is used or whether the predetermined operation is succeeded, and the like.

In addition, the controller may select a voice, which is set corresponding to a mission level reached by the usage history of the moving robot among a plurality of preset mission levels, as a voice for outputting the feedback voice message. In this case, a condition of the preset plurality of mission levels may include a number of times of performing predetermined operations for the respective levels.

Further, as the mission level reached by the usage history of the moving robot becomes higher, the controller may select a voice at an older age as the voice for outputting the feedback voice message. Accordingly, a voice feedback may be provided, which grows older according to a reached mission level

Meanwhile, according to the usage history of the moving robot, the controller may provide a different content of the feedback voice message for a same speech input, thereby providing different guidance messages according to a usage history.

Meanwhile, the controller may select the voice according to a number of times the moving robot performs a specific operation, thereby providing a voice feedback which varies according to a usage history of the specific operation.

For example, in response to a number of times the moving robot performs a first operation being greater than or equal to a reference value, the controller may select a first voice, and in response to a number of times the moving robot performs a second operation being greater than or equal to the reference value, the controller may select a second voice.

Further, the controller may select the voice based on a speech recognition result for the speech input, and may select the voice according to a usage history of an operation included in the speech recognition result.

The moving robot may perform a speech recognition process by itself or through a server.

In accordance with another aspect of the present disclosure, the above and other objects can be accomplished by providing a moving robot including: an input unit configured to receive a speech input of a user; an audio output unit configured to output a feedback voice message corresponding to the speech input; and a controller configured to control the feedback voice message to be output in different voices according to a speech recognition result for the speech input, thereby providing different voice feedbacks according to a user's speech input.

Even in this case, the electronic device, such as the moving robot and the like, may further include a storage in which a usage history thereof is stored, and may select the voice according to a usage history of an operation included in the speech recognition result and may provide a different content of the feedback voice message for a same speech input according to the usage history.

In addition, as a number of times of performing the operation included in the speech recognition result increases, the controller may select a voice at an older age as a voice for outputting the feedback voice message, thereby providing a voice feedback which gradually grows older in age.

In accordance with yet another aspect of the present disclosure, the above and other objects can be accomplished by providing a moving robot including: an input unit configured to receive a speech input of a user; an audio output unit configured to output a feedback voice message corresponding to the speech input; a storage configured to store a usage history of the moving robot; and a controller configured to control the feedback voice message to be output in different voices according to the stored usage history, thereby providing different voice feedbacks according to a learning level of artificial intelligence.

In this case, as a learning level of the stored usage history becomes higher, the controller may select a voice at an older age as a voice for outputting the feedback voice message, thereby providing a voice feedback which gradually grows older in age according to a learning level.

### [Advantageous Effects]

According to at least one of embodiments of the present disclosure, the electronic device, such as the moving robot and the like, may utter speech to a user, thereby providing interaction with the user through speech.

In addition, according to at least one of embodiments of the present disclosure, by using artificial intelligence and machine learning in speech recognition, obstacle recognition, analysis of product data, etc., evolving user experience (UX) may be provided.

Furthermore, according to at least one of embodiments of the present disclosure, a voice feedback may be provided which grows older in age as a voice, tone, etc., of the electronic device, such as the moving robot and the like, vary according to a usage time, frequency, pattern, and the like.

Moreover, according to at least one of embodiments of the present disclosure, speech recognition is performed autonomously by the electronic device such as the moving robot and the like, is performed by the server, or is performed in stages, thereby providing effective speech recognition.

Further, according to at least one of embodiments of the present disclosure, before receiving a request, the electronic device such as the moving robot and the like may actively provide information and recommend services, functions, etc., thereby improving reliability, preference, and product availability.

Meanwhile, the other effects may be explicitly or implicitly disclosed in the description of the embodiments of the present disclosure.

### [Description of Drawings]

FIG. 1 is a configuration diagram of a home appliance network system according to an embodiment of the present disclosure.
FIG. 2 is a perspective view of a moving robot of an embodiment of the present disclosure.
FIG. 3 is a plan view of the moving robot of FIG. 2.
FIG. 4 is a side view of the moving robot of FIG. 2.
FIG. 5 is a block diagram illustrating a connection relationship between main components of a moving robot according to an embodiment of the present disclosure.
FIG. 6 is a diagram referred to in description of learning using product data according to an embodiment of the present disclosure.
FIG. 7 is an internal block diagram of a server of an embodiment of the present disclosure.
FIG. 8 is a flowchart illustrating a method of controlling a moving robot according to an embodiment of the present disclosure.
FIGS. 9 to 11 are diagrams referred to in description of a method of controlling a moving robot according to an embodiment of the present disclosure.

### [Best Mode for Carrying Out the Invention]

Reference will now be made in detail to the example embodiments of the present invention, examples of which are illustrated in the accompanying drawings. However, it will be understood that the present disclosure should not be limited to the embodiments and may be modified in various ways.

In order to clearly and briefly describe the present disclosure, components that are irrelevant to the description will be omitted in the drawings, and same reference numerals are used throughout the drawings to designate the same or extremely similar elements.

Terms "module" and "unit" for elements used in the following description are given simply in view of the ease of the description, and do not carry any important meaning or role. Therefore, the "module" and the "part" may be used interchangeably.

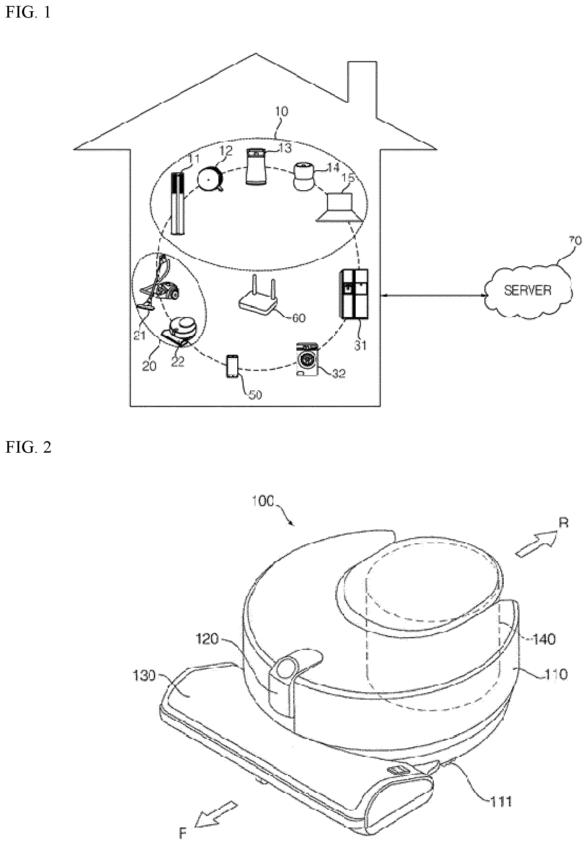

An electronic device according to an embodiment of the present disclosure may include various devices capable of performing voice interaction, such as speech recognition, speech utterance, and the like. For example, the electronic device according to an embodiment of the present disclosure may be an air conditioner (see 11 of FIG. 1), a moving robot (see 22 of FIG. 1, 100 of FIG. 2, etc.), a refrigerator (see 31 of FIG. 1), a washing machine (32 of FIG. 1), and the like.

In addition, the moving robot 100 according to an embodiment of the present disclosure refers to a robot capable of moving by itself with wheels and the like, and examples thereof may include a home helper robot, a robot cleaner, and the like.

The following description will be given with reference to the accompanying drawings by using a robot cleaner as an example among moving robots, but the present disclosure is not limited thereto.

FIG. 1 is a configuration diagram of a home appliance network system according to an embodiment of the present disclosure.

Referring to FIG. 1, the home appliance network system may include home appliances having a communication module to communicate with other devices or a server 70, or to be connected to a network.

For example, the home appliances may include a heating, ventilation, and air conditioning (HVAC) device 10, a cleaner 20, a refrigerator 31, a washing machine 32, and the like, which have a communication module.

Meanwhile, the HVAC device 10 may include at least one of an air conditioner 11, air purifiers 12 and 13, a humidifier 14, and a hood 15.

In addition, the cleaner 20 may be a vacuum cleaner 21, a robot cleaner 22, and the like.

Meanwhile, the communication module included in the home appliances 10, 20, 31, and 32 may be a Wi-Fi communication module, and the present disclosure is not limited to any particular communication method.

Alternatively, the home appliances 10, 20, 31, and 32 may include different types of communication modules or may include a plurality of communication modules. For example, the home appliances 10, 20, 31, and 32 may include an NFC module, a Zigbee communication module, a Bluetooth^{™} communication module, and the like.

The home appliances 10, 20, 31, and 32 may be connected to the predetermined server 70 via the Wi-Fi communication module and the like, and may support smart functions such as remote monitoring, remote controlling, and the like.

The home appliance network system according to an embodiment of the present disclosure may include a mobile terminal 50 such as a smartphone, a tablet PC, and the like.

By using the mobile terminal 50, a user may check information on the home appliances 10, 20, 31, and 32 in the home appliance network system, or may control the home appliances 10, 20, 31, and 32.

Meanwhile, the home appliance network system according to an embodiment of the present disclosure may include a plurality of Internet of Things (IoT) devices (not shown). Accordingly, the home appliance network system may include the home appliances 10, 20, 31, and 32, the mobile terminal 50, the IoT devices, and the like.

The home appliance network system according to an embodiment of the present disclosure is not limited to any particular communication method of establishing a network.

For example, the home appliances 10, 20, 31, and 32, the mobile terminal 50, and the IoT devices may be communicably connected via a wired/wireless router 60.

Furthermore, the devices in the home appliance network system may establish a mesh topology in which the respective devices are communicably connected individually.

The home appliances 10, 20, 31, and 32 in the home appliance network system may communicate with the server 70 or the mobile terminal 50 via the wired/wireless router 60. In addition, the home appliances 10, 20, 31, and 32 in the home appliance network system may communicate with the server 70 or the mobile terminal 50 via Ethernet.

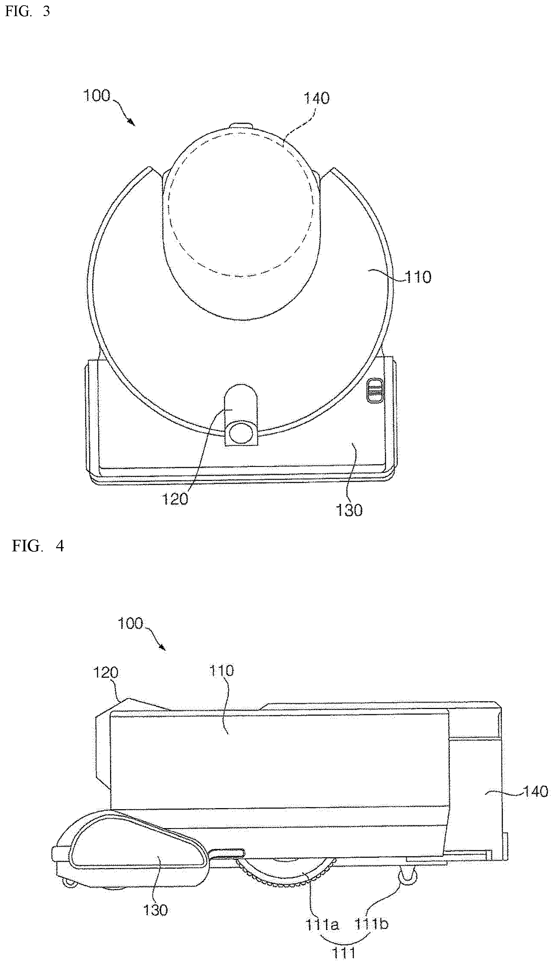

FIG. 2 is a perspective view of a moving robot according to an embodiment of the present disclosure, FIG. 3 is a plan view of the moving robot of FIG. 2, and FIG. 4 is a side view of the moving robot of FIG. 2.

Referring to FIGS. 2 to 4, the moving robot 100 may travel autonomously in a predetermined area. The moving robot 100 may perform a function of cleaning the floor. Here, the cleaning of the floor includes suctioning dust (including foreign matter) from the floor or mopping the floor.

The moving robot 100 includes a main body 110. The main body 110 may include a cabinet forming the exterior thereof. The moving robot 100 may include a suction unit 130 and a dust container 140 provided for the main body 110. The moving robot 100 includes an image acquirer 120 detecting information on the surroundings of the moving robot. The moving robot 100 includes a travel unit 160 to allow the main body to travel. The moving robot 100 may include a controller 181 to control the moving robot 100. The controller 18 is provided in the main body 110.

The travel unit 160 includes a wheel unit 111 to allow the moving robot 100 to travel. The wheel unit 111 is provided in the main body 110. By the wheel unit 111, the moving robot 110 may move in all directions or may rotate. As the controller controls driving of the wheel unit 111, the moving robot 100 may travel autonomously on the floor. The wheel unit 111 includes main wheels 111a and a sub-wheel 111b.

The main wheels 111a are provided on both sides of the main body 110 to be rotated in one direction or in the other direction according to a control signal of the controller. The respective main wheels 111a may be configured to be driven independently from each other. For example, the main wheels 111a may be driven by different motors.

The sub-wheel 111b supports the main body 110 together with the main wheels 111a and is configured to assist in traveling of the moving robot 100. The sub-wheel 111b may also be provided in the suction unit 130 which will be described later.

The suction unit 130 may protrude from a front side (F) of the main body 110. The suction unit 130 is configured to suction air containing dust.

The suction unit 130 may be formed to protrude from the front side of the main body 110 toward both left and right sides thereof. A front end portion of the suction unit 130 is disposed at a position spaced apart forward from one side of the main body 110. Both left and right end portions of the suction unit 130 may be disposed at positions spaced apart leftward and rightward from the main body 110, respectively.

As the main body 110 is formed in a circular shape, and both sides of a rear end portion of the suction unit 130 respectively protrude leftward and rightward from the main body 110, empty spaces, i.e., gaps may be formed between the main body 110 and the suction unit 120. The empty spaces are spaces between both left and right end portions of the main body 110 and both left and right end portions of the suction unit 120, and may be recessed inwardly of the moving robot 110.

The suction unit 130 may be detachably coupled to the main body 110. When the suction unit 130 is separated from the main body 110, a mop module (not shown) may be detachably coupled to the main body 110 in replacement of the separated suction unit 130.

The image acquirer 120 may be disposed in the main body 110. The image acquirer 120 may be disposed on the front side F of the main body 110. The image acquirer 120 may be disposed to overlap the suction unit 130. The image acquirer 120 may be disposed above the suction unit 130.

The image acquirer 120 may detect obstacles around the moving robot 100. The image acquirer 120 may detect front obstacles, geographic features, or the like, so that the suction unit 130, disposed at a foremost position of the moving robot 100, may not collide with the obstacles. In addition to the detecting function, the image acquirer 120 may further perform other sensing functions which will be described later.

A dust container receiving part (not shown) may be provided in the main body 110. The dust container 140, separating dust from the suctioned air and collecting the separated dust, is detachably coupled to the dust container receiving part. The dust container receiving part may be formed on a rear side R of the main body 110. One portion of the dust container 140 is received in the dust container receiving part, and the other portion of the dust container 140 protrudes toward the rear side R of the main body 110.

The dust container 140 may have an inlet (not shown), through which air containing dust is introduced, and an outlet (not shown) through which air separated from the dust is discharged. When the dust container 140 is mounted in the dust container receiving part, the inlet and outlet of the dust container 140 may communicate with a first opening (not shown) and a second opening (not shown) formed at an inner wall of the dust container receiving part.

An intake passage (not shown) for guiding air from a suction port of the suction unit 130 to the first opening is provided. An exhaust passage (not shown) for guiding air from the second opening to an exhaust port (not shown) which is open toward the outside may be provided.

Air containing dust, which is drawn in by the suction unit 130, passes through the intake passage in the main body 110 to be introduced into the dust container 140, and the air and dust may be separated from each other by passing through a filter or a cyclone provided in the dust container 140. The dust is collected in the dust container 140. After being discharged from the dust container 140, the air passes through the exhaust passage in the main body 110 to be finally discharged to the outside through the exhaust port.

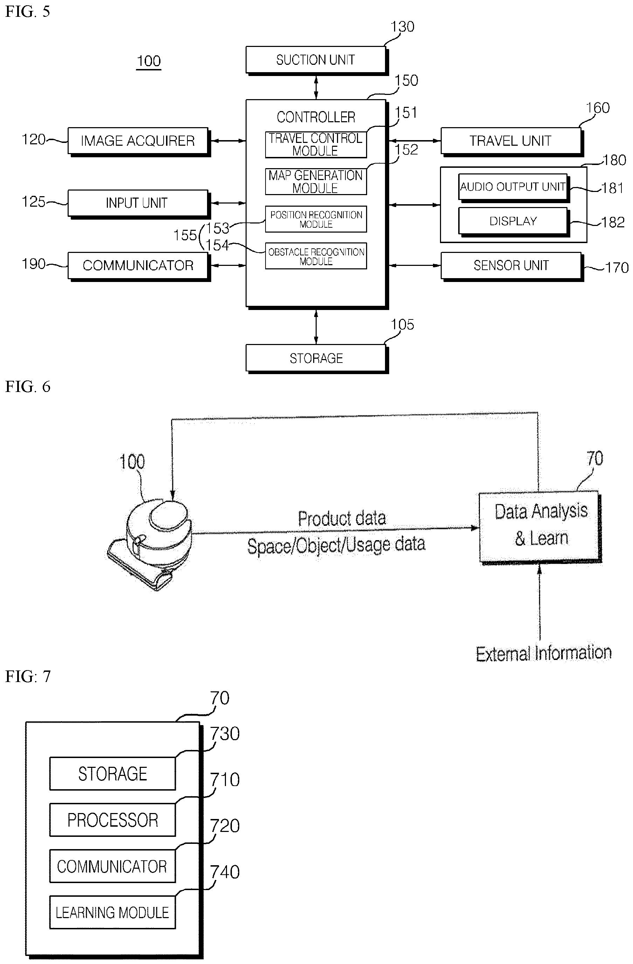

FIG. 5 is a block diagram illustrating a connection relationship between main components of a moving robot according to an embodiment of the present disclosure.

Referring to FIGS. 2 to 5, the moving robot 100 includes the main body 110, and the image acquirer 120 acquiring surrounding images of the main body 110.

The moving robot 100 includes the travel unit 160 for allowing the main body 110 to move. The travel unit 160 includes at least one wheel unit 111 for allowing the main body 110 to move. The travel unit 160 includes a driving motor (not shown) coupled to the wheel unit 111 to rotate the wheel unit 111.

The image acquirer 120, configured to photograph a travel area, and may include a camera module. The camera module may include a digital camera. The digital camera may include at least one optical lens, an image sensor (e.g., CMOS image sensor) having a plurality of photodiodes (e.g., pixels) on which an image is formed by light passing through the optical lens, and a digital signal processor (DSP) to construct an image based on signals output from the photodiodes. The DSP may produce not only still images, but also a video consisting of frames of still images.

A plurality of cameras may be installed at each portion for photographing efficiency. Images photographed by the cameras may be used to recognize types of materials such as dust, human hair, floor, etc., which are present in a corresponding space, to check whether cleaning is performed, or to confirm a cleaning time.

The camera may photograph obstacles located ahead in a direction of travel of the moving robot 100.

According to an embodiment of the present invention, the image acquirer 120 may acquire a plurality of images by continuously photographing the surroundings of the main body 110, and the plurality of acquired images may be stored in a storage 105.

The moving robot 100 may increase accuracy in space recognition, position recognition, and obstacle recognition by using a plurality of images, or may increase accuracy in space recognition, position recognition, and obstacle recognition by selecting one or more images from the plurality of images to use data effectively.

In addition, the moving robot 100 may include a sensor unit 170 including sensors for sensing various data related to operations and states of the moving robot.

For example, the sensor unit 170 may include an obstacle detection sensor for sensing a front obstacle. In addition, the sensor unit 170 may further include a cliff detection sensor for sensing the presence of a cliff on the floor in a travel area, and a lower camera sensor for acquiring an image of the floor.

The obstacle detection sensor may include an infrared sensor, an ultrasonic sensor, an RF sensor, a magnetic sensor, a Position Sensitive Device (PSD) sensor, and the like.

Meanwhile, the positions and types of sensors included in the obstacle detection sensor may vary according to a model of a moving robot, and the obstacle detection sensor may further include various sensors.

Meanwhile, the sensor unit 170 may further include a motion detection sensor for sensing motions of the moving robot 100 as the main body 110 is driven, and for outputting motion information. For example, a gyro sensor, a wheel sensor, an acceleration sensor, and the like may be used as the motion detection sensor.

When the moving robot 100 moves according to an operation mode, the gyro sensor senses a direction of rotation and detects an angle of rotation. The gyro sensor detects an angular velocity of the moving robot 100, and outputs a voltage value in proportion to the angular velocity. By using the voltage value output by the gyro sensor, the controller 150 calculates the direction of rotation and the angle of rotation.

The wheel sensor, coupled to the wheel unit 111, senses the revolutions per minute (RPM) of the wheels. Here, the wheel sensor may be a rotary encoder.

The acceleration sensor may sense a change in velocity of the moving robot 100, for example, a change caused when the moving robot 100 starts, stops, changes directions, collides with an object, and the like.

In addition, the acceleration sensor, which is embedded in the controller 150, may sense a change in velocity of the moving robot 100.

The controller 150 may calculate a change in position of the moving robot 100 based on motion information output by the motion sensor. Such position may be a relative position corresponding to an absolute position based on image information. By recognizing such relative position, the moving robot may enhance position recognition performance using image information and obstacle information.

Meanwhile, the moving robot 100 may include a power supply (not shown) having a rechargeable battery to supply power to the moving robot 100.

The power supply may supply driving power and operating power to each component of the moving robot 100; and may be charged by receiving power from a charging station (not shown) when a remaining power capacity is insufficient.

The moving robot 100 may further include a battery sensing unit (not shown) to sense the state of charge of the battery and transmit a sensing result to the controller 150. The battery is connected to the battery sensing unit such that a remaining battery capacity and the state of charge of the battery may be transmitted to the controller 150. The remaining battery capacity may be disposed on a display 182 of the output unit 180.

In addition, the moving robot 100 may include an input unit 125 to input an on/off command or various other commands. The input unit 125 may include a button, a dial, a touch screen, and the like. The input unit 125 may include a microphone to receive input of a user's voice command. Various control commands, required for the overall operation of the moving robot 100, may be received through the input unit 125.

Further, the moving robot 100 includes the output unit 180 to display reservation information, a battery state, an operation mode, an operation state, an error state, etc., as images or sounds.

The output unit 180 may include an audio output unit 181 outputting audio signals. The audio output unit 181 may output a warning sound and a notification message, such as an operation mode, an operation state, an error state, etc., as sounds under the control of the controller 150. The audio output unit 181 may convert an electrical signal transmitted from the controller 150, into an audio signal and may output the audio signal. To this end, the audio output unit 181 may include a speaker and the like.

In addition, the output unit 180 may further include the display 182 displaying reservation information, a battery state, an operation mode, an operation state, an error state, etc., as images.

Referring to FIG. 5, the moving robot 100 includes a controller 150 for processing and determining a variety of information, including recognizing a current position and the like. In addition, the moving robot 100 may further include a communicator 190 for transmitting and receiving data with an external terminal.

The external terminal may be provided with an application for controlling the moving robot 100, may display a map of a travel area to be cleaned by executing the application, and may designate a specific area to be cleaned on the map. Examples of the external terminal may include a remote control, a PDA, a laptop computer, a smartphone, a tablet PC, and the like, in which an application for configuring a map is installed.

By communicating with the moving robot 100, the external terminal may display the current position of the moving robot 100 along with the map, and may display information on a plurality of areas. In addition, the external terminal updates the position of the moving robot during traveling of the moving robot, and displays the updated position.

The controller 150 may control the image acquirer 120, the input unit 125, the travel unit 160, the suction unit 130, etc., and may control the overall operation of the moving robot 100.

The controller 150 may process a user's speech input signal received through the microphone of the input unit 125, and may perform a speech recognition process. Depending on embodiments, the moving robot 100 may include a speech recognition module performing speech recognition and provided inside or outside of the controller 150.

Depending on embodiments, simple speech recognition may be performed autonomously by the moving robot 100, and high-dimensional speech recognition, such as natural language processing and the like, may be performed by the server 70.

The storage 105 records a variety of information required to control the moving robot 100, and may include a volatile or non-volatile recording medium. The recording medium stores data readable by a microprocessor and may include a Hard Disk Drive (HDD), a Solid State Disk (SSD), an Silicon Disk Drive (SDD), a ROM, a RAM, a CD-ROM, a magnetic tape, a floppy disk, an optical data storage device, and the like.

In addition, the storage 105 may store a map of a travel area. The map may be a map input by an external terminal, a server, etc., which may exchange information with the moving robot 100 through wired or wireless communications, or may be a map generated by the moving robot 100 by learning the area by itself.

Positions of rooms in the travel area may be indicated on the map. Further, the current position of the moving robot 100 may be indicated on the map, and the current position of the moving robot 100 may be updated during traveling. An external terminal stores the same map as the map stored in the storage 105.

The storage 105 may store cleaning history information. The cleaning history information may be generated every time cleaning is performed.

The map of the traveling area, which is stored in the storage 105, may be a navigation map used for traveling during cleaning, a Simultaneous localization and mapping (SLAM) map used for position recognition, a learning map generated by storing information on an obstacle and the like upon collision with the obstacle and the like, and used for cleaning based on learning, an entire position map used for entire position recognition, an obstacle recognition map in which information on recognized obstacles is recorded, and the like.

As described above, the maps may be classified according to use and may be stored and managed in the storage 105, but the maps may not be classified clearly. For example, a plurality of information items may be stored in one map to be used for at least two uses.

The controller 150 may include a travel control module 151, a map generation module 152, a position recognition module 153, and an obstacle recognition module 154.

Referring to FIGS. 1 to 5, the travel control module 151 controls traveling of the moving robot 100, and controls driving of the travel unit 160 according to a travel setting. In addition, the travel control module 151 may identify a travel path of the moving robot 100 based on the operation of the travel unit 160. For example, the travel control module 151 may identify a current or previous moving speed, mileage, etc., of the moving robot 100 based on the RPM of the wheel unit 111; and based on the identified traveling information of the moving robot 100, the position of the moving robot 100 may be updated on the map.

The map generation module 152 may generate a map of the travel area. The map generation module 152 may generate a map by processing an image acquired by the image acquirer 120. That is, the map generation module 152 may generate a cleaning map corresponding to an area to be cleaned.

Further, the map generation module 152 may recognize the entire position by processing the images acquired by the image acquirer 120 at each position and matching the processed images with a map.

The position recognition module 153 may recognize a current position by estimation. The position recognition module 153 may identify a position by using image information of the image acquirer 120 in conjunction with the map generation module 152, such that even when the position of the moving robot 100 is suddenly changed, the position recognition module 153 may estimate the current position and recognize the position.

In addition, the position recognition module 153 may recognize attributes of an area of the current position. That is, the position recognition module 153 may recognize spaces.

While traveling continuously, the moving robot 100 may recognize a position by the position recognition module 153, and may learn a map and estimate the current position and the like by the map generation module 152 and the obstacle recognition module 154 without the position recognition module 153.

During traveling of the moving robot 100, the image acquirer 120 acquires surrounding images of the moving robot 100. Hereinafter, images acquired by the image acquirer 120 may be referred to as "acquired images."

The acquired image may include various features, such as lights placed on the ceiling, edges, corners, blobs, ridges, and the like.

The map generation module 152 may detect features from the respective acquired images and may calculate descriptors based on the respective feature points.

Based on descriptor information obtained from the acquired image of each position, the map generation module 152 may classify at least one descriptor of each acquired image into a plurality of groups according to a predetermined subclassification rule, and may convert the descriptors, included in the same group, into each representative sub-descriptor according to a predetermined representative sub-rule.

In another example, the map generation module 152 may classify all of descriptors obtained from the acquired images of a predetermined area, such as a room, into a plurality of groups according to a predetermined subclassification rule, and may convert the descriptors, included in the same group, into each representative sub-descriptor according to the predetermined representative sub-rule.

In this manner, the map generation module 152 may obtain feature distribution of each position. The feature distribution of each position may be expressed as a histogram or an n-dimensional vector. In another example, the map generation module 152 may estimate an unknown current position based on a descriptor generated from each feature point without using the predetermined subclassification rule and the predetermined representative sub-rule.

Further, when the current position of the moving robot 100 becomes unknown due to position jumping and the like, a current position may be estimated based on data such as a pre-stored descriptor or a representative sub-descriptor.

The moving robot 100 receives the acquired images from the image acquirer 120 at the unknown current position. Various features, such as lights placed on the ceiling, edges, corners, blobs, ridges, and the like, may be found in the images.

The position recognition module 153 may detect features from the acquired images and may calculate descriptors.

Based on information on at least one descriptor obtained from the acquired image of the unknown current position, the position recognition module 153 converts information (sub-recognition feature distribution) which is comparable with position information (e.g., feature distribution of each position) serving as a comparison target, according to a predetermined sub-conversion rule.

By comparing each position feature distribution with each recognition feature distribution according to a predetermined sub-comparison rule, a similarity therebetween may be calculated. A similarity (probability) may be calculated for the respective positions corresponding to each position, and a position having the highest probability may be determined to be the current position.

As described above, the controller 150 may divide the travel area and may generate a map of a plurality of regions, or may recognize a current position of the main body 110 based on a pre-stored map.

Upon generating the map, the controller 150 may transmit the generated map to an external terminal, a server, etc., through the communicator 190. Further, as described above, upon receiving a map from the external terminal, the server, etc., the controller 150 may store the received map in the storage 105.

In this case, an area to be cleaned in the map may be divided into a plurality of areas, a connecting passageway is included in the map, and information on obstacles in the areas may be included in the map.

Once a cleaning command is input, the controller 150 may determine whether the position on the map coincides with the current position of the moving robot. The cleaning command may be input from a remote controller, the input unit, or the external terminal.

If the current position does not coincide with the position on the map, or if the current position may not be identified, the controller 150 may recognize and restore the current position of the moving robot 100, and then may control the travel unit 160 so that the moving robot 100 may move to a designated region based on the current position.

If the current position does not coincide with the position on the map, or if the current position may not be identified, the position recognition module 153 may analyze the acquired image, input from the image acquirer 120, and may estimate the current position based on the map. In addition, the obstacle recognition module 154 or the map generation module 152 may also recognize the current position in the same manner.

Once the controller 150 recognizes the position and restores the current position of the moving robot 100, the travel control module 151 calculates a travel path from the current position to the designated region and controls the travel unit 160 to move to the designated region.

Upon receiving cleaning pattern information from the server, the travel control module 151 may divide the entire travel area into a plurality of regions based on the received cleaning pattern information and may set one or more regions as designated regions.

In addition, the travel control module 151 may calculate a travel path based on the received cleaning pattern information and may perform cleaning by traveling along the travel path.

Once cleaning of the set designated region is complete, the controller 150 may store a cleaning record in the storage 105.

Further, the controller 150 may transmit an operating state or a cleaning state of the moving robot 100 to the external terminal or the server at predetermined intervals.

Accordingly, the external terminal displays the position of the moving robot on the screen of a running application along with a map based on the received data, and also outputs information on the cleaning state.

The moving robot 100 according to the embodiment of the present disclosure moves in one direction until an obstacle or a wall is sensed, and when the obstacle recognition module 154 recognizes the obstacle, the moving robot 100 may determine a traveling pattern, such as moving straight ahead or turning, based on attributes of the recognized obstacle.

Meanwhile, the controller 150 may control the moving robot to perform avoidance traveling in different patterns based on attributes of the recognized obstacle. Based on the attributes of obstacles, the controller 150 may control the moving robot to perform avoidance traveling in different patterns such as a non-dangerous obstacle (a common obstacle), a dangerous obstacle, a movable obstacle, and the like.

For example, the controller 150 may control the moving robot to avoid a dangerous obstacle by detouring the dangerous obstacle while securing a longer safety distance.

In addition, when there is a movable obstacle, if the movable obstacle does not move even after a predetermined standby time, the controller 150 may control the moving robot to perform avoidance traveling corresponding to a common obstacle or avoidance traveling corresponding to a dangerous obstacle. Alternatively, when an avoidance traveling pattern corresponding to a movable obstacle is set separately, the controller 150 may control the moving robot to travel according to the pattern.

The moving robot 100 according to the embodiment of the present disclosure may perform obstacle recognition and avoidance based on machine learning.

The controller 150 may include the obstacle recognition module 154 that recognizes pre-learned obstacles by machine learning from an input image, and the travel control module 151 that controls driving of the travel unit 160 based on the attributes of the recognized obstacles.

Meanwhile, FIG. 5 illustrates an example in which the plurality of modules 151, 152, 153, and 154 are provided separately in the controller 160, but the present disclosure is not limited thereto.

For example, the position recognition module 153 and the obstacle recognition module 154 may be integrated into one recognizer, whereby they may be configured as one recognition module 155. In this case, it is possible to train the recognizer using a learning technique such as machine learning, and the trained recognizer may recognize the attributes of regions, objects, etc., by classifying data input thereafter.

Depending on embodiments, the map generation module 152, the position recognition module 153, and the obstacle recognition module 154 may be configured as a single integrated module.

The following description will be focused on an example in which the position recognition module 153 and the obstacle recognition module 154 are integrated into one recognizer and are configured as one recognition module 155, but even when the position recognition module 153 and the obstacle recognition module 154 are provided separately, they may operate in the same manner.

The moving robot 100 according to an embodiment of the present disclosure may include a recognition module 155 trained with attributes of objects and spaces through machine learning.

Machine learning refers to a technique which provides computer systems the ability to learn with data and solve problems for themselves without being instructed by logic.

Deep learning refers to an artificial intelligence technique based on Artificial Neural Networks (ANN), which enables computer systems to think and learn for themselves like humans do.

The ANN may be implemented in a software form, or in a hardware form such as a chip and the like.

The recognition module 155 may include an artificial neural network (ANN) of a software or hardware type trained with the attributes of spaces and the attributes of objects, such as obstacles and the like.

For example, the recognition module 155 may include a DNN (Deep Neural Network), such as a CNN (Convolutional Neural Network), an RNN (Recurrent Neural Network), a DBN (Deep Belief Network), etc., which are trained through deep learning.

The recognition module 155 may determine the attributes of spaces and objects included in input image data based on weights between nodes included in the DNN.

Meanwhile, the travel control module 151 may control driving of the travel unit 160 based on the attributes of the recognized spaces and obstacles.

Meanwhile, the recognition module 155 may recognize the attributes of spaces and obstacles included in images of selected specific time points based on data learned previously through machine learning.

Meanwhile, input data for determining the attributes of spaces and objects, and a data for training the DNN may be stored in the storage 105.

Original images acquired by the image acquirer 120 and extracted images, from which predetermined regions are extracted, may be stored in the storage 105.

Further, depending on embodiments, weights and biases constituting the DNN structure may be stored in the storage 105.

Alternatively, depending on embodiments, the weights and biases constituting the DNN structure may be stored in an embedded memory of the recognition module 155.

Meanwhile, the recognition module 155 may perform a learning process using predetermined images as training data every time the image acquirer 120 acquires an image or extracts a portion of an image, or may perform a learning process after a predetermined number of images or more are acquired.

Alternatively, the moving robot 100 may receive data, related to machine learning, from the predetermined server through the communicator 190.

In this case, the moving robot 100 may update the recognition module 155 based on the data related to machine learning and received from the predetermined server.

FIG. 6 is a diagram referred to in description of learning using product data according to an embodiment of the present disclosure.

Referring to FIG. 6, product data, obtained by the operation of a predetermined device, such as the moving robot 100 and the like, may be transmitted to the server 70.

For example, the moving robot 100 may transmit data, related to spaces, objects, usage, etc., to the server 70.

Here, the data related to the spaces and objects may be data related to recognition of the spaces and objects recognized by the moving robot 100 or may be image data about the spaces and objects acquired by the image acquirer 120.

Further, data related to usage may be data obtained upon using a predetermined product, e.g., the moving robot 100, and may be usage history data, sensing data obtained by the sensor 170, and the like.

Meanwhile, a DNN structure, such as a CNN and the like, may be embedded in the controller 150 of the moving robot 100, and more particularly the recognition module 155.

The trained DNN may receive input data for recognition and may recognize the attributes of objects and spaces included in the input data and output recognition results.

Further, the trained DNN structure may receive the input data for recognition, and may recognize a usage pattern, usage environment, and the like by analyzing and learning data related to usage of the moving robot 100.

Meanwhile, the data related to spaces, objects, and usage may be transmitted to the server 70 through the communicator 190.

The server 70 may generate a configuration of learned weights, and the server 70 may train the DNN structure using training data.

Upon training the DNN based on the received data, the server 70 may transmit updated DNN structure data to the moving robot 100 so as to update the DNN structure.

Accordingly, a home appliance product, such as the moving robot 100 and the like, may get smarter, and may provide UX which evolves as it is used more.

FIG. 7 is an internal block diagram of a server according to an embodiment of the present disclosure.

Referring to FIG. 7, the server 70 includes a communicator 720, a storage 730, a learning module 740, and a processor 710.

The processor 710 may control the overall operation of the server 70.

Meanwhile, the server 70 may be a server run by a home appliance manufacturer such as a manufacturer of the moving robot 100 and the like, or a server run by a service provider, or a type of cloud server.

The communicator 720 may receive various data, such as state information, operation information, manipulation information, etc., from a mobile terminal, a home appliance such as the moving robot 100 and the like, or a gateway.

Further, the communicator 720 may transmit data corresponding to various types of received information to a mobile terminal, a home appliance such as the moving robot 100 and the like, or a gateway.

To this end, the communicator 720 may include one or more communication modules, such as an Internet module, a mobile communication module, and the like.

The storage 730 may store received information and data for generating result information corresponding thereto

In addition, the storage 730 may store data used for machine learning, result data, and the like.

The learning module 740 may act as a learning device of a home appliance such as the moving robot 100 and the like.

The learning module 740 may include the artificial neural network (ANN), e.g., DNN (Deep Neural Network), such as the Convolutional Neural Network (CNN), Recurrent Neural Network (RNN), Deep Belief Network (DBN), etc., and may learn the DNN.

Meanwhile, after training according to a setting, the controller 710 may control an ANN structure of a home appliance, such as the moving robot 100 and the like, to be updated to the trained ANN structure.

Further, the learning module 740 may receive input data for recognition and may recognize the attributes of objects and spaces included in the input data and output recognition results. In this case, the communicator 720 may transmit the recognition results to the moving robot 100.

In addition, the learning module 740 may recognize a usage pattern, usage environment, and the like by analyzing and learning data related to usage of the moving robot 100, and may output results. In this case, the communicator 720 may transmit the results to the moving robot 100.

Accordingly, home appliance products, such as the moving robot 100 and the like, may receive the recognition results from the server 70, and may operate by using the received recognition results.

Furthermore, the server 70 becomes smarter by learning using product data, thereby providing user experience which evolves as the home appliance product is used more.

Meanwhile, the moving robot 100 and the server 70 may also use external information.

For example, the moving robot 100 and the server 70 may provide excellent user experience by comprehensively using internal information, such as space information, object information, usage pattern, and the like of a specific home appliance such as the moving robot 100 and the like, and external information obtained by the server 70 form other connected service server.

According to an embodiment of the present disclosure, a sequence of operation of products in the home appliance network system, which are connected via Wi-Fi based on artificial intelligence, may be optimized and may provide a user with the optimized sequence of operation.

For example, cleaning may be performed by the moving robot 100, dust caused during the cleaning may be managed by the air purifiers 12 and 13, and humidity and temperature in the house may be controlled by the air conditioner 11, and the washing machine 32 may wash the clothes so that the washing may be finished just in time when a user arrives at home.

The server 70 may perform speech recognition by receiving a speech input signal uttered by a user. To this end, the server 70 may include a speech recognition module, and the speech recognition module may include an ANN trained to perform speech recognition on the input data and to output speech recognition results.

Meanwhile, the server 70 may include a speech recognition server for speech recognition. Further, the speech recognition server may include a plurality of servers to share a predetermined process during a speech recognition process. For example, the speech recognition server may include an Automatic Speech Recognition (ARS) server receiving speech data and converting the received speech data into text data, and a Natural Language Processing (NLP) server receiving the text data from the ARS server, and analyzing the received text data and determining speech command. In some cases, the speech recognition server may further include a Text to Speech (TTS) server converting a text speech recognition result, output by the NLP server, into audio data and transmitting the data to another server or home appliance.

According to the present disclosure, the moving robot 100 and/or the server 70 may perform speech recognition, such that a user's speech may be used as an input for controlling the moving robot 100.

In addition, according to the present disclosure, the moving robot 100 may actively provide information in advance or may output speech for recommending functions and services, thereby providing a user with various and active control functions.

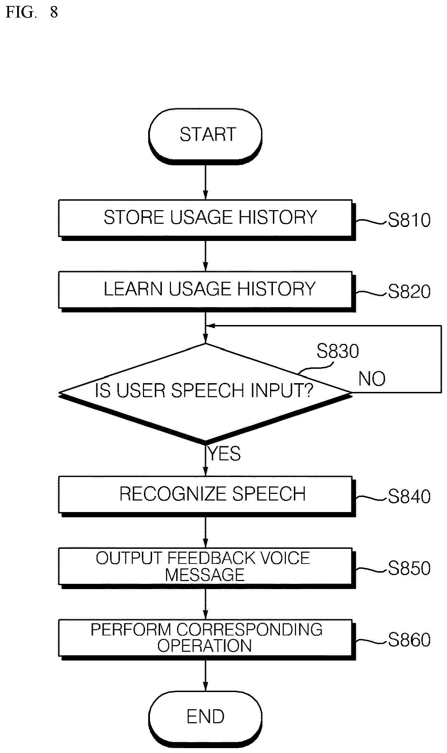

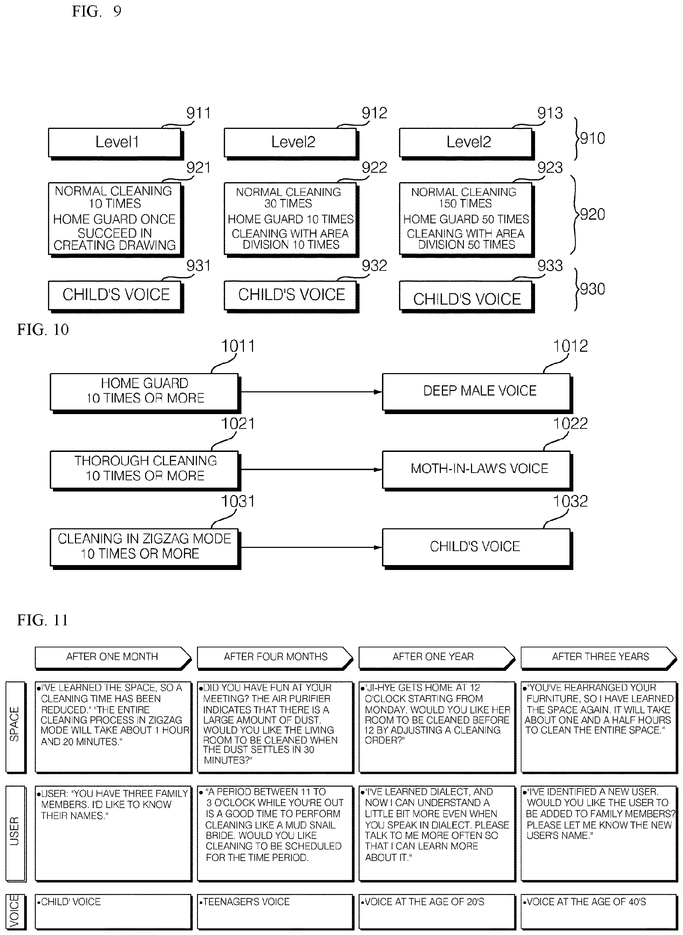

FIG. 8 is a flowchart illustrating a method of controlling a moving robot according to an embodiment of the present disclosure, and FIGS. 9 to 11 are diagrams referred to in description of a method of controlling a moving robot according to an embodiment of the present disclosure.

Referring to FIG. 8, the moving robot 100 according to an embodiment of the present disclosure may store a usage history when performing a specific operation (S810).

For example, upon completing cleaning of a travel area once in a predetermined mode, the moving robot 100 may store cleaning history information in the storage 105. In some cases, the cleaning history information may include information, such as a time of performing a cleaning operation, a cleaning mode, a success rate in cleaning, and the like.

Further, the moving robot 100 may store details of interaction with a user and data sensed by the sensor unit 170 as the usage history.

Meanwhile, at least a portion of the usage history data, stored in the storage 105, may be transmitted to the server 70 through the communicator 190, and the server 70 may store product data, such as the usage history data received from the moving robot 100 and the like, in the storage 730.

Depending on embodiments, artificial intelligence is mounted in the controller 150 of the moving robot 100, such that the moving robot 100 may learn the usage history (S820).

More preferably, as described above with reference to FIG. 6, the server 70 may analyze and learn product data obtained by the operation of a predetermined device such as the moving robot 100 and the like.

In this case, the learning step (S820) of the moving robot 100 may be performed by receiving Al-related data, such as a DNN structure data updated based on learning performed by the server 70 and the like, and by updating the stored AI.

The moving robot 100 according to the present disclosure may receive a user's speech input through one or more microphones (MIC) provided for the input unit 125 (S830) and may recognize the received user's speech input (S840).

A speech recognition process (S840) of the speech input may be performed autonomously by the moving robot 100 or the server 70, or may be performed in stages by the moving robot 100 and the server 70, thereby performing effective speech recognition.

For example, the moving robot 100 includes a speech recognition module provided inside or outside of the controller 150, such that the moving robot 100 may recognize a user's speech autonomously.

Alternatively, the moving robot 100 may transmit data, which is based on the received speech input, to the server 70 through the communicator 190, and may receive a speech recognition result, corresponding to the speech input, from the server 70.

Alternatively, the moving robot 100 may autonomously perform recognition of a trigger word and a simple keyword command, and the server 70 may perform high-dimensional recognition of natural language processing.

Subsequently, in response to reception of a user's speech command (S830), the moving robot 100 may perform an operation corresponding to the speech command of the identified user (S860).

For example, based on the result of the user's speech command recognition (S840), if it is determined that the speech command is a command for cleaning a travel area in a thorough cleaning mode, the moving robot 100 may perform cleaning of the travel area once in the thorough cleaning mode (S860).

Meanwhile, prior to performing the corresponding operation (S860), the moving robot 100 may output a feedback speech message through an audio output unit 181 (S850). Alternatively, while performing the corresponding operation (S860), the moving robot 100 may output the feedback speech message through the audio output unit 181 (S850).

The moving robot 100, having a Text to Speech (TTS) module in the audio output unit 181 and the like, may output the feedback speech message (S850) corresponding to the speech recognition result.

Further, the moving robot 100 may store guide messages for outputting the feedback voice message in the storage 105, or the moving robot 100 may select any one of the stored guide messages based on the speech recognition result, and may convert the selected message into a voice message and output the voice message.

Depending on embodiments, upon requesting a sound source file of a predetermined feedback voice message and receiving the sound source file, the moving robot 100 may output the feedback voice message.

According to the present disclosure, by providing voice feedback with voices, tones, etc. of the moving robot which are variable and grow older according to a usage time, frequency, pattern, etc., thereby generating expectations in a user and providing a fun factor to the user, as well as improving and reliability of a product.

To this end, an electronic device, such as the moving robot 100 according to one aspect of the present disclosure and the like, includes the input unit 125 receiving a user's speech input, the audio output unit 181 outputting a feedback voice message corresponding to the speech input, the storage 105 in which a usage history of the electronic device such as the moving robot 100 and the like is stored, and the controller 150 controlling outputting of the feedback voice message in different voices according to the stored usage history, thereby providing different voice feedbacks according to the usage history.

For example, the controller 150 may select a voice for a feedback voice message according to a usage time of the electronic device such as the moving robot 100 and the like.

Currently, many devices, such as a moving robot and the like, output one type of voice (sound or tone) for all their functions. For example, in the case of the robot cleaner, the same voice is provided regardless of operations of thorough cleaning, cleaning in a zigzag mode, intensive cleaning, cleaning by dividing the travel area, smart diagnosis, home guard, and the like. That is, regardless of whether the moving robot performs any function or whether feedback is provided on any operation, the same voice is output. This shows that the voice serves as a minimum guidance for informing a user of a product state and operating state of the robot cleaner, and the user has no expectations in the voice or there is no availability of the voice.

In the present disclosure, different voice feedbacks may be provided for a user by varying the sound and tone of the guide voice according to a usage history.

According to the present disclosure, the sound and tone of voice informing a user may vary according to a usage history of the electronic device such as the moving robot 100 and the like, thereby generating expectations in the user. Further, a success rate of operations or traveling accuracy is not provided as quantitative data but is provided in a manner that may appeal to the user's emotions.

More preferably, as a usage time of the electronic device such as the moving robot 100 and the like increases, the controller 150 may select a voice at an older age as a voice for outputting the feedback voice message.

In the electronic device such as the moving robot 100 and the like, various voice guide messages including a feedback voice message and the like may be uttered in a child's voice immediately after the purchase until a predetermined usage time is reached; and every time a usage time reaches a predetermined time interval, age may be increased so that a voice at an older age may be used.

Accordingly, without need to check data separately, a user may identify a usage time of the electronic device, such as the moving robot 10 and the like, by hearing the voice of the electronic device such as the moving robot 10 and the like, and the user may feel as if the electronic device, such as the moving robot 10 and the like, grows up.

Meanwhile, the controller 150 may select the voice according to a success rate or a number of times of success in operations of the electronic device, such as the moving robot 10 and the like.

For example, upon performing a cleaning operation, the controller 150 may select a voice for a feedback voice message corresponding to a cleaning success rate of the travel area.

In addition, upon dividing the travel area into a plurality of regions, the controller 150 may select a voice for a feedback voice message based on a success rate or a number of times of success in cleaning of a specific region or cleaning of the regions according a predetermined setting.

Further, as a success rate or a number of times of success in operations of the moving robot 100 increases, the controller 150 may select a voice at an older age and/or voice with a higher tone.

Accordingly, the user may intuitively verify how often a predetermined operation is used or whether the predetermined operation is succeeded, and the like.

Depending on embodiments, the controller 150 may control recording of missions performed by the moving robot 100, such that a voice and a message may vary according to the record of the missions. For example, the missions may include a number of times of returning to a charging stand, a number of times of completing a cleaning operation, a number of times of a home guard function, a number of times of DNN object detection, and the like. In addition, the tone and message of the guide voice may vary according to the record of the missions. For example, corresponding to the record of the missions, voices may be provided in stages from a child's voice to an adult's voice.

The controller 150 may select a voice, which is set corresponding to a mission level reached by a usage history of the moving robot 100 among a plurality of preset mission levels, as the voice for outputting the feedback voice message.

For example, the plurality of preset mission levels may include a number of times of performing predetermined operations for each level.

FIG. 9 illustrates missions 920 and voices 930 set for a plurality of levels 910 in the case where an electronic device is a moving robot performing a cleaning operation. Referring to FIG. 9, mission 1 921, having a lowest level of difficulty, may be set for a lowest level 1 911. For example, conditions of mission 1 921 may be set, which include performing normal cleaning 10 times, home guard once, and creating a drawing of an entire map or at least a portion of the map.

If a usage history of the moving robot 100 reaches the conditions set for mission 1 921, a child's voice 931 which is set corresponding to level 1911 may be used as a voice for outputting the feedback voice message.

That is, a default voice is initially used, and after normal cleaning is performed 10 times, home guard is performed once, and a drawing of a map is created, the voice may be changed to the child's voice set corresponding to level 1911.

In addition, for level 2 912 which is one step higher than level 1 911, mission 2 922 may be set which has a higher level of difficulty or a larger number of times of performing operations. For example, conditions of mission 2 922 may be set, which include performing normal cleaning 30 times, home guard 10 times, and cleaning with travel area division 10 times.

Furthermore, as the usage history of the moving robot 100 reaches a higher mission level, the controller 150 may select a voice at an older age as a voice for outputting the feedback voice message. Accordingly, the controller 150 may provide voice feedback which grows older in age according to the reached mission levels.

Once the usage history of the moving robot 100 reaches the predetermined conditions set for mission 2 922, a student's voice 932 at a young age which is set corresponding to level 2 912 may be used as a voice for outputting the feedback voice message.

Likewise, for level 3 913 which is one step higher than level 2 912, mission 3 923 may be set which has a higher level of difficulty or a larger number of times of performing operations than mission 2 922. For example, conditions of mission 3 923 may be set, which include performing normal cleaning 150 times, home guard 50 times, and cleaning with travel area division 50 times.

Once the usage history of the moving robot 100 reaches the predetermined conditions set for mission 3 923, an adult's voice 933 at a grown-up age which is set corresponding to level 3 913 may be used as a voice for outputting the feedback voice message.

FIG. 9 is merely exemplary, and the present disclosure is not limited thereto. For example, details of the respective missions 921, 922, and 923 may be changed. Further, level 1 911 and the child's voice 931 may be set to a default level and the default voice. In this case, the child's voice 931 may be used at the initial stage of using the moving robot 100, and once mission 1 921 is complete, it may proceed to level 2 912, such that the child's voice 931 may be changed to the student's voice 932.

The present disclosure may be applied not only to the moving robot 100, but voice interactions, such as recognition, utterance of speech, etc., of the present disclosure may also be applied to various electronic devices, and the respective missions 921, 922, and 923 may vary according to each device.

For example, in the case where the electronic device according to the present disclosure is the air conditioner 11, missions may be set based on a number of times of performing some of the operations, such as a smart care operation 10 times, a power saving operation 10 times, an air-purifying function 10 times, a remote controlling operation 10 times, etc., which may be performed by the air conditioner 11.

Alternatively, in the case where the electronic device according to the present disclosure is the washing machine 32, missions may be set based on a number of times of performing some of the operations, such as a smart care operation 10 times, a remote controlling operation 10 times, voice interaction 20 times, etc., which may be performed by the washing machine 32.

Meanwhile, by providing different contents of the feedback voice message for the same voice input according to a usage history of the electronic device such as the moving robot 100 and the like, the controller 150 may provide different guidance messages according to the usage history.

That is, not only a voice may be changed according to the usage history of the electronic device such as the moving robot 100 and the like, but also a feedback voice message corresponding to the same voice input may be output with a different content.

For example, as a number of times of using the moving robot 100 or a usage period of the moving robot 100 increases, a feedback voice message with detailed information may be output. Alternatively, the controller 150 may output a feedback voice message with a content and a way of talking that matches a voice selected according to the usage history of the moving robot 100.

Depending on embodiments, according to the present disclosure, a voice tone and a content may vary according to each specific operation such as thorough cleaning, quick cleaning, home guard, map building, and the like. For example, by using a deep male voice for the home guard, a mother-in-law's voice for the thorough cleaning, etc., a tone of the guidance voice and a content may vary according to the details of a corresponding operation.

Depending on embodiments, by selecting the voice according to a frequency of a specific operation of the moving robot, the controller 150 may provide a voice feedback which varies according to the usage history for the specific operation. That is, according to the frequency of the specific operation, the controller 150 may set a voice tone and a content to be variable according to the details of the operation.

According to the present disclosure, different voice tones and contents may be provided according to a number of times of performing a specific operation such as thorough cleaning, quick cleaning, home guard, map building, and the like.

For example, if a number of times the moving robot performs a first operation is greater than or equal to a reference value, the controller 150 may select a first voice; and if a number of times the moving robot performs a second operation is greater than or equal to a reference value, the controller 150 may select a second voice.

Referring to FIG. 10, if a condition 1011 for using the home guard 10 times is satisfied, the controller 150 may use a deep male voice 1012 as the voice for outputting the feedback voice message.

In addition, if a condition 1021 for using the thorough cleaning 10 times or more is satisfied, the controller 150 may use a mother-in-law's voice 1022 as the voice for outputting the feedback voice message.

Further, if a condition 1031 for using cleaning in a zigzag mode 10 times or more is satisfied, the controller 150 may use a child's voice 1032 as the voice for outputting the feedback voice message.

Meanwhile, if the plurality of usage conditions 1021, 1022, and 1023 are satisfied, the controller 150 may use a voice which is set corresponding to a most performed operation. Alternatively, based on a speech recognition result, the controller 150 may use a voice which is set corresponding to an operation included in a user's voice command or a related operation.

The present disclosure may be applied not only to the moving robot 100, but voice interactions, such as recognition, utterance of speech, etc., of the present disclosure may also be applied to various electronic devices, and details of the respective usage conditions 1021, 1022, and 1023 may vary according to each device.

For example, in the case where the electronic device according to the present disclosure is the air conditioner 11, the usage conditions may be set based on a number of times of performing some of the operations, such as a smart care operation 10 times, a power saving operation 10 times, an air-purifying function 10 times, a remote controlling operation 10 times, etc., which may be performed by the air conditioner 11.

Alternatively, in the case where the electronic device according to the present disclosure is the washing machine 32, the usage conditions may be set based on a number of times of performing some of the operations, such as a smart care operation 10 times, a remote controlling operation 10 times, voice interaction 20 times, etc., which may be performed by the washing machine 32.

Meanwhile, the moving robot 100 may perform a speech recognition process by itself or through the server 70, and the controller 150 may select the voice for outputting the feedback voice message according to a speech recognition result in response to the speech input.

In addition, the controller 150 may select the voice according to the usage history of operations included in the speech recognition result.

Meanwhile, the electronic device, such as the moving robot 100 and the like, according to one aspect of the present disclosure includes: the input unit 125 configured to receive a user's speech input; the audio output unit 181 configured to output a feedback voice message corresponding to the speech input; and the controller 150 configured to control outputting of the feedback voice message in different voices according to the speech input result in response to the speech input, thereby providing different voice feedbacks according to a user's speech input.

Even in this case, the electronic device such as the moving robot 100 and the like may include the storage 105, in which a usage history of the electronic device such as the moving robot 100 and the like is stored, and may select the voice according to a usage history of operations included in the speech recognition result.

For example, if a command corresponding to a home guard operation is included based on the speech recognition result, the controller 150 may check a usage history of the home guard operation. If a number of times of performing the home guard operation is 10 times or more and less than 20 times, the controller 150 may use a deep male voice, which is set corresponding to the 10 times or more and less than 20 times of the home guard operation, as the voice for outputting the feedback voice message.

In addition, as a number of times of performing operations included in the speech recognition result increases, the controller 150 may select a voice at an older age as the voice for outputting the feedback voice message, thereby providing a voice feedback which gradually grows older in age.

Further, even in this embodiment, the controller 150 may provide different contents of the feedback voice message for the same speech input, according to the usage history of the moving robot 100.

The present disclosure may be appealing to users by providing a means of allowing the users to be indirectly informed of traveling accuracy, success rates of operations, etc., without verifying data. For example, based on traveling records or operation records, and using indicators such as a number of times of recording, success rates, etc., the controller 150 may provide notification by varying a voice tone or a content provided for users.

In addition, the present disclosure may provide a voice wife having a voice tone and a content which are appropriate for the characteristics of each function of the moving robot 100.

Meanwhile, the electronic device, such as the moving robot 100 and the like, according to an aspect of the present disclosure includes: the input unit 125 configured to receive a user's speech input; the audio output unit 181 configured to output a feedback voice message corresponding to the speech input; the storage 105 configured to store a usage history of the electronic device such as the moving robot 100 and the like; and the controller 150 configured to control outputting of the feedback voice message in different voices according to a learning level of the stored usage history, thereby providing different voice feedbacks according to a learning level of artificial intelligence.

In this case, as a learning level of the stored usage history becomes higher, the controller 150 selects a voice at an older age as the voice for outputting the feedback voice message, thereby providing a voice feedback which grows older in age according to the learning level.

Referring to FIG. 11, by analyzing and learning internal information, such as space information, object information, usage pattern, etc., as well as external information, voice guidance services may be provided by using different voices according to the learning level.

For example, after learning a space, the moving robot 100 may adjust a cleaning order based on understanding of the space, and voice may also grow in age in response thereto.

Referring to FIG. 11, after learning a travel area for about one month, the moving robot 100 may actively provide a voice briefing in a child's voice by saying "I've learned the space, so a cleaning time has been reduced" or "the entire cleaning process in a zigzag mode will take about 1 hour and 20 minutes." Alternatively, in response to a voice input such as a user's cleaning command and the like, the moving robot 100 may provide a speech utterance of the content in a feedback voice guidance message.

Thereafter, if a learning level of the space is further improved after learning the space about 3 months more, the moving robot 100 may propose a cleaning plan in consideration of information and operations of other devices, by saying "did you have fun at your meeting? The air purifier indicates that there is a large amount of dust. Would you like the living room to be cleaned when the dust settles in 30 minutes?" in a teenager's voice.

Thereafter, if a learning level of the space is further improved after learning the space about 8 months more, the moving robot 100 may map the space onto family members, and may propose a cleaning plan by saying "Ji-hye gets home at 12 o'clock starting from Monday. Would you like her room to be cleaned before 12 by adjusting a cleaning order?" in a voice at the age of 20's.

Then, if a learning level of the space is further improved after learning the space for about 2 years more, the moving robot 100 may provide guide information on a changed space and the like, by saying in a voice at the age of 40's "you've rearranged your furniture, so I have learned the space again. It will take about one and a half hours to clean the entire space."

After learning users, such as family members and the like, of the travel area, the moving robot 100 may adjust a cleaning order based on understanding of the users, and a voice may also grow in age in response thereto.

Referring to FIG. 11, after learning behavior patterns of the users of the travel area based on image and voice data acquired for about one month, the moving robot 100 may provide information on three identified users by saying in a child's voice "you have three family members. I'd like to know their names" and may output a voice to induce user input. Alternatively, in response to speech input such as a user's cleaning command and the like, the moving robot 100 may provide a speech utterance of the above information in a feedback voice guidance message.

Thereafter, if a learning level of the users is further improved after learning the users for about 3 months more, the moving robot 100 may propose a cleaning plan in consideration of behavior patterns of the users, by saying "a period between 11 to 3 o'clock while you're out is a good time to perform cleaning like a mud snail bride. Would you like cleaning to be scheduled for the time period? in a teenager's voice.

Thereafter, if a learning level of the users is further improved after learning the users about 8 months more, the moving robot 100 may output voice guidance in consideration of personal characteristics of the family members, by saying in a voice at the age of 20's "I've learned dialect, and now I can understand a little bit more even when you speak in dialect. Please talk to me more often so that I can learn more about it."

Then, if a learning level of the users is further improved after learning the users for about 2 years more, the moving robot 100 may provide guide information on a changed user and the like, by saying in a voice at the age of 40's "I've identified a new user. Would you like the user to be added to family members? Please let me know the new user's name."

The moving robot according to the present disclosure are not limited to the configuration and method of the embodiments as described above, but all or part of each of the embodiments may be configured to be selectively combined to achieve various modifications.

Meanwhile, the method of controlling the moving robot according to the embodiments of the present disclosure can be realized as a computer-readable code written on a computer-readable recording medium. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission through the Internet). The computer-readable recording medium can be distributed over a plurality of computer systems connected to a network so that a computer-readable code is written thereto and executed therefrom in a decentralized manner.

## Claims

1. A moving robot (100) comprising:
an input unit (125) configured to receive a speech input of a user;
an audio output unit (181) configured to output a feedback voice message corresponding to the speech input;
**characterized by**
a storage (105) configured to store a usage history of the moving robot (100); and
a controller (150) configured to control the feedback voice message to be output in different voices according to the stored usage history.

2. The moving robot of claim 1, wherein the controller (150) is configured to select the voice according to a usage time of the moving robot (100) or a success rate or number of times of success in performing operations of the moving robot (100).

3. The moving robot of claim 1, wherein the controller is configured to select a voice, which is set corresponding to a mission level reached by the usage history of the moving robot (100) among a plurality of preset mission levels, as a voice for outputting the feedback voice message.

4. The moving robot of claim 3, wherein a condition of the preset plurality of mission levels comprises a number of times of performing predetermined operations for the respective levels.

5. The moving robot of claim 3, wherein as the mission level reached by the usage history of the moving robot becomes higher, the controller selects a voice at an older age as the voice for outputting the feedback voice message.

6. The moving robot of claim 1, wherein the controller (150) is configured to select the voice according to a number of times the moving robot (100) performs a specific operation.

7. The moving robot of claim 6, wherein in response to a number of times the moving robot (100) performs a first operation being greater than or equal to a reference value, the controller (150) is configured to select a first voice, and in response to a number of times the moving robot (100) performs a second operation being greater than or equal to the reference value, the controller (150) is configured to select a second voice.

8. The moving robot of claim 1, wherein the controller (150) is configured to select the voice based on a speech recognition result for the speech input.

## Patentansprüche

1. Beweglicher Roboter (100), der Folgendes umfasst:
eine Eingabeeinheit (125), die konfiguriert ist, eine Spracheingabe eines Benutzers zu empfangen;
eine Audio-Ausgabeeinheit (181), die konfiguriert ist, eine Feedback-Sprachnachricht entsprechend der Spracheingabe auszugeben;
**gekennzeichnet durch**
einen Speicher (105), der konfiguriert ist, einen Nutzungsverlauf des beweglichen Roboters (100) zu speichern; und
eine Steuerung (150), die konfiguriert ist, die Feedback-Sprachnachricht so zu steuern, dass sie entsprechend dem gespeicherten Nutzungsverlauf mit unterschiedlichen Stimmen ausgegeben wird.

2. Beweglicher Roboter nach Anspruch 1, wobei die Steuerung (150) konfiguriert ist, die Stimme entsprechend einer Nutzungszeit des beweglichen Roboters (100) oder einer Erfolgsquote oder einer Anzahl, mit der die Vorgänge des beweglichen Roboters (100) erfolgreich ausgeführt wurden, auszuwählen.

3. Beweglicher Roboter nach Anspruch 1, wobei die Steuerung konfiguriert ist, eine Stimme, die entsprechend einer Auftragsstufe eingestellt wird, die durch den Nutzungsverlauf des beweglichen Roboters (100) aus mehreren zuvor eingestellten Auftragsstufen erreicht worden ist, als eine Stimme zum Ausgeben der Feedback-Sprachnachricht auszuwählen.

4. Beweglicher Roboter nach Anspruch 3, wobei eine Bedingung der zuvor eingestellten mehreren Auftragsstufen eine Anzahl umfasst, mit der die zuvor festgelegten Vorgänge für die jeweiligen Stufen ausgeführt werden.

5. Beweglicher Roboter nach Anspruch 3, wobei dann, wenn die Auftragsstufe, die durch den Nutzungsverlauf des beweglichen Roboters erreicht wird, höher wird, die Steuerung eine Stimme mit einem höheren Alter als die Stimme zum Ausgeben der Feedback-Sprachnachricht auswählt.

6. Beweglicher Roboter nach Anspruch 1, wobei die Steuerung (150) konfiguriert ist, die Stimme entsprechend einer Anzahl auszuwählen, mit der der bewegliche Roboter (100) einen bestimmten Vorgang ausgeführt hat.

7. Beweglicher Roboter nach Anspruch 6, wobei in Reaktion darauf, dass eine Anzahl, mit der der bewegliche Roboter (100) einen ersten Vorgang ausgeführt hat, größer oder gleich einem Referenzwert ist, die Steuerung (150) konfiguriert ist, eine erste Stimme auszuwählen und in Reaktion darauf, dass eine Anzahl, mit der der bewegliche Roboter (100) einen zweiten Vorgang ausgeführt hat, größer oder gleich dem Referenzwert ist, die Steuerung (150) konfiguriert ist, eine zweite Stimme auszuwählen.

8. Beweglicher Roboter nach Anspruch 1, wobei die Steuerung (150) konfiguriert ist, die Stimme auf der Basis eines Spracherkennungsergebnisses für die Spracheingabe auszuwählen.

## Revendications

1. Robot mobile (100) comportant :
une unité d'entrée (125) configurée pour recevoir une entrée vocale d'un utilisateur ;
une unité de sortie audio (181) configurée pour délivrer en sortie un message vocal de retour correspondant à l'entrée vocale ;
**caractérisé par**
un dispositif de stockage (105) configuré pour stocker un historique d'utilisation du robot mobile (100) ; et
une commande (150) configurée pour commander le message vocal de retour à émettre dans différentes voix en fonction de l'historique d'utilisation stocké.

2. Robot mobile selon la revendication 1, dans lequel la commande (150) est configurée pour sélectionner la voix en fonction d'un temps d'utilisation du robot mobile (100) ou d'un taux de réussite ou d'un nombre de réussites dans l'exécution d'opérations du robot mobile (100).

3. Robot mobile selon la revendication 1, dans lequel la commande est configurée pour sélectionner une voix correspondant à un niveau de mission atteint par l'historique d'utilisation du robot mobile (100) parmi une pluralité de niveaux de mission prédéfinis, qui est définie comme une voix destinée à délivrer le message vocal de retour.

4. Robot mobile selon la revendication 3, dans lequel une condition de la pluralité prédéfinie de niveaux de mission comporte un nombre d'exécutions d'opérations prédéterminées pour les niveaux respectifs.

5. Robot mobile selon la revendication 3, dans lequel lorsque le niveau de mission atteint par l'historique d'utilisation du robot mobile devient plus élevé, la commande sélectionne une voix d'âge plus ancien que la voix destinée à délivrer le message vocal de retour.

6. Robot mobile selon la revendication 1, dans lequel la commande (150) est configurée pour sélectionner la voix en fonction d'un nombre de fois où le robot mobile (100) exécute une opération spécifique.

7. Robot mobile selon la revendication 6, dans lequel en réponse à un nombre de fois où le robot mobile (100) exécute une première opération étant supérieur ou égal à une valeur de référence, la commande (150) est configurée pour sélectionner une première voix, et en réponse à un nombre de fois où le robot mobile (100) exécute une seconde opération étant supérieur ou égal à la valeur de référence, la commande (150) est configurée pour sélectionner une seconde voix.

8. Robot mobile selon la revendication 1, dans lequel la commande (150) est configurée pour sélectionner la voix sur la base d'un résultat de reconnaissance vocale pour l'entrée vocale.
